# EUROPÄISCHE PATENTSCHRIFT

(11) **EP 0 448 968 B1**
(45) Veröffentlichungstag und Bekanntmachung des Hinweises auf die Patenterteilung: **10.05.1995**
(21) Anmeldenummer: 91102775.3
(22) Anmeldetag: 26.02.1991
(51) Int. Cl.: C05F 17/02

(54) **Vorrichtung zum Umsetzen von in Mieten gelagertem Kompost**
Apparatus for shifting and turning of compost piles
Appareil pour déplacer et retourner le compost stocké en tas

(30) Priorität: 26.03.1990 DE 4009660
(43) Veröffentlichungstag der Anmeldung: 02.10.1991
(73) Patentinhaber: J. WILLIBALD GMBH Maschinenfabrik, D-88639 Wald (DE)
(72) Erfinder: Willibald, Josef, W-7771 Frickingen 2/Altheim (DE)
(74) Vertreter: Seemann, Norbert W., Dipl.-Ing.

(56) Entgegenhaltungen:
- EP-A- 0 275 347
- EP-A- 0 358 986
- DE-U- 9 006 637
- US-A- 4 397 674

## Beschreibung

Die vorliegende Erfindung bezieht sich nach dem Oberbegriff des Patentanspruchs 1 auf eine Vorrichtung zum maschinellen Abtragent und seitlichen Versetzen von in Längsmieten gelagertem Kompost bzw. zu kompostierendem pflanzlichen Material.

Alle bislang bekannten Verfahren und Vorrichtungen auf diesem technischen Sachgebiet arbeiten bislang ausschließlich nach dem Prinzip des stirnseitigen Abtragens und seitlichen bzw. über Kopf verlaufenden Versetzens der Kompostmieten. Verwiesen sei hierzu beispielsweise auf die US-PS 44 10 142. Diese Arbeitsweise hat aber den großen Nachteil, daß der Schlepperfahrer durch den beim Umsetzen der Mieten zwangsläufig entstehenden Dampf und Staub nicht nur stark belästigt wird, sondern vor allem keinen freien Blick auf die jeweilige Arbeitsstelle hat und so nicht gezielt bzw. dosiert fahren und ein optimales Arbeitsergebnis erzielen kann.
Aus der EP-A-0 358 986 ist eine Vorrichtung bekannt, die ein vertikal gerichtetes, umlaufendes, mit Fräszinken versehenes Abtragwerkzeug aufweist, das in einem Gestell gelagert ist, dem ein bodenseitig beginnender Schrägförderer sowie ein gemeinsamer Hauptantrieb für die beiden genannten Elemente zugeordnet ist.

Diese Vorrichtung ist für einen stirnseitigen Abtrag einer Miete konzipiert. Es kann die gesamte Mietenquerschnittsbreite abgetragen werden, wodurch u.U. die Produktivität steigt.

Die Aufgabe der vorliegenden Erfindung liegt deshalb auch darin, durch eine neue, ein anderes Arbeitsverfahren ermöglichende Vorrichtung hier Abhilfe zu schaffen und die zuvor aufgeführten Nachteile der Sichtbeeinträchtigung der Bedienungsperson zu beseitigen.

Gelöst wird diese Aufgabe durch die in den Patentansprüchen angegebenen Mittel und Maßnahmen, die anhand der Zeichnungen zudem im folgenden noch näher erläutert sind.

Es zeigen:
- Fig. 1: eine Seitenansicht auf die neue Vorrichtung,
- Fig. 2: eine maßstabsgleiche Draufsicht zu Fig. 1,
- Fig. 3: die neue Umsetzvorrichtung in Fahrtrichtung von vorn gesehen und in verkleinertem Maßstab gegenüber den Fig. 1 und 2,

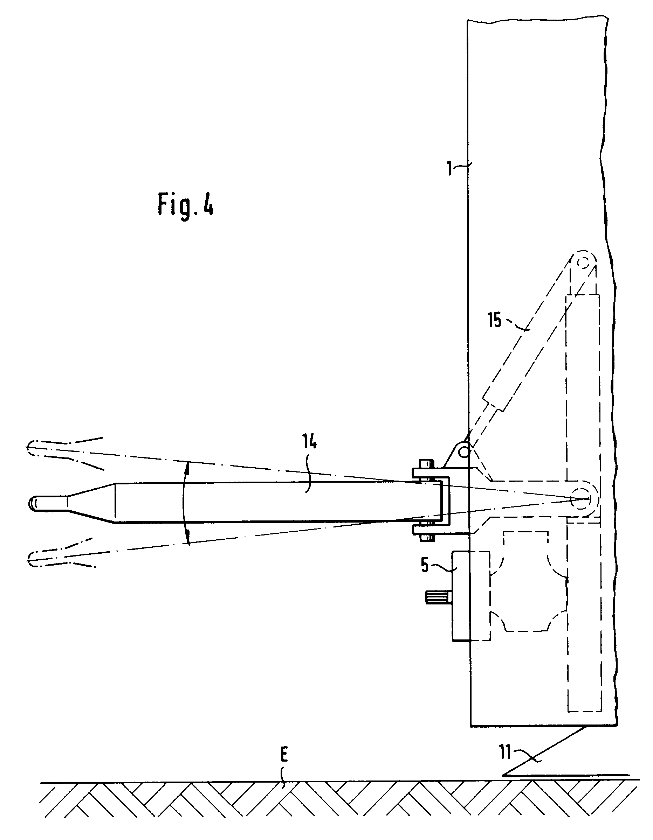

- Fig. 4: die Alternative mit Zugdeichsel in Seitenansicht,

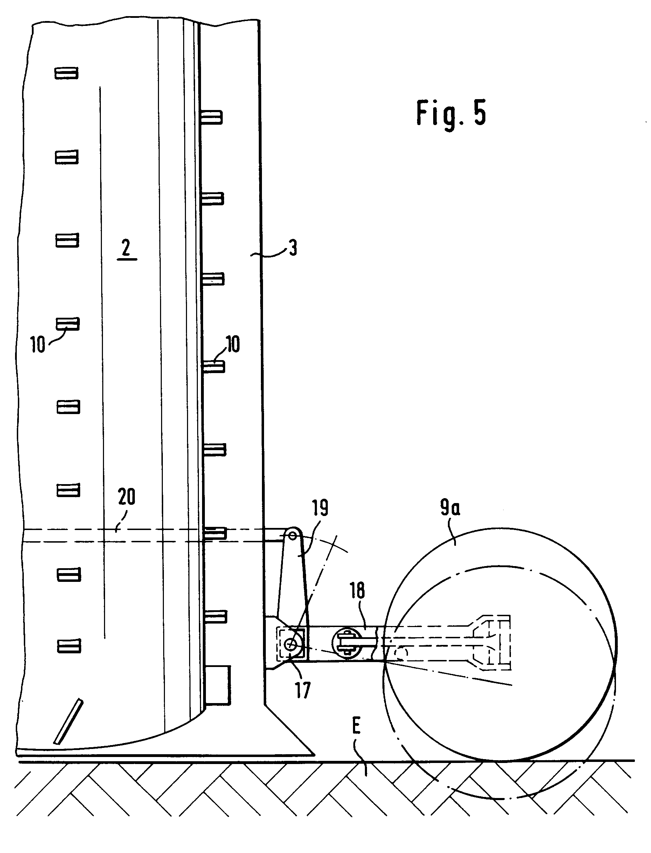

- Fig. 5: die Laufrädergestaltung zu Fig. 4,

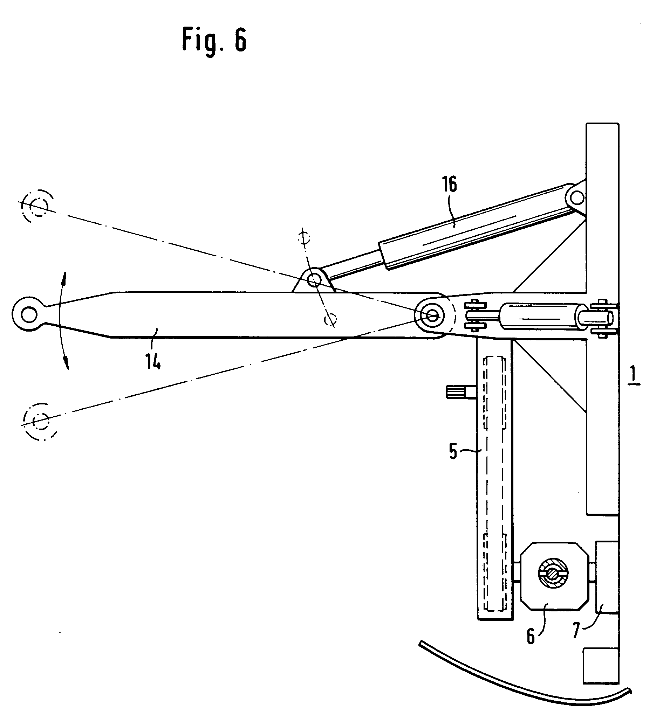

- Fig. 6: eine Draufsicht zu Fig. 4 und

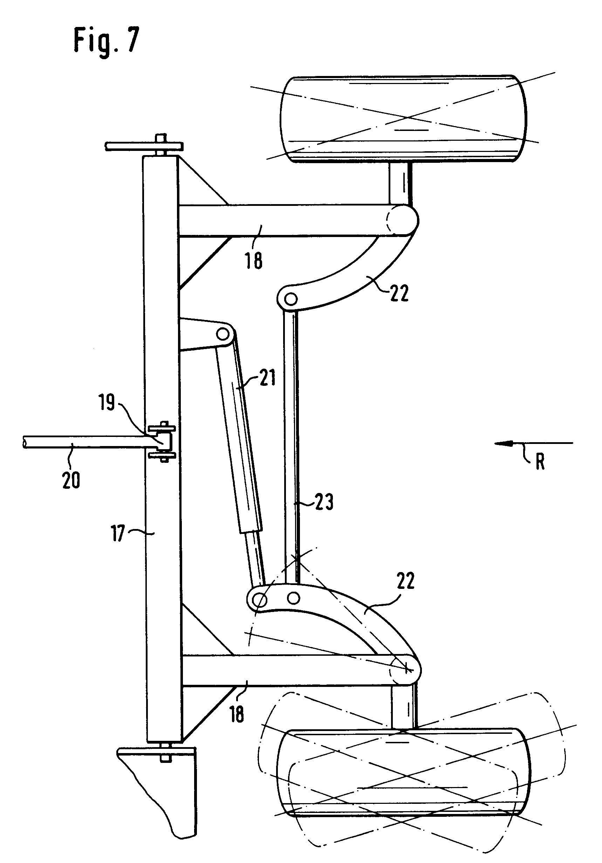

- Fig. 7: eine Draufsicht zu Fig. 5.

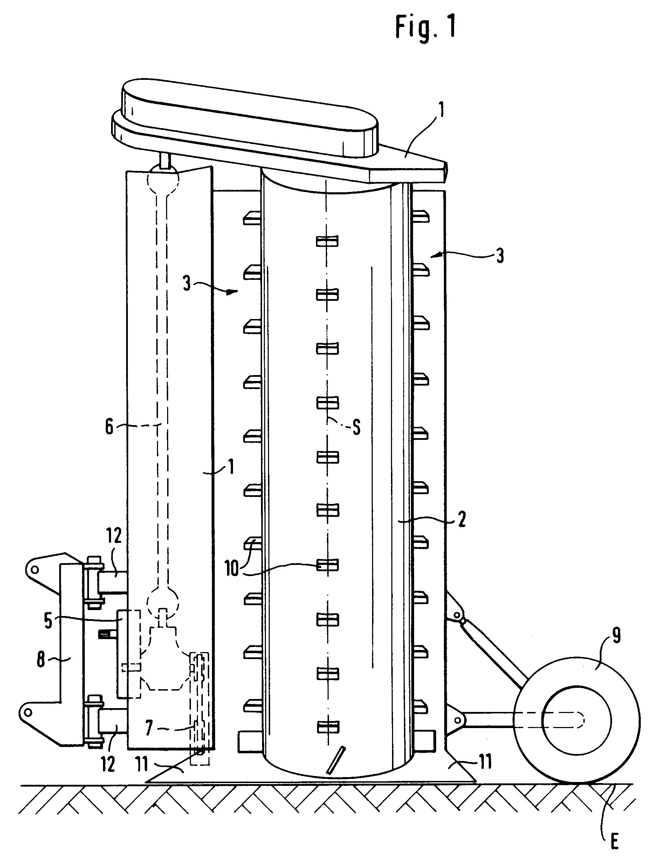

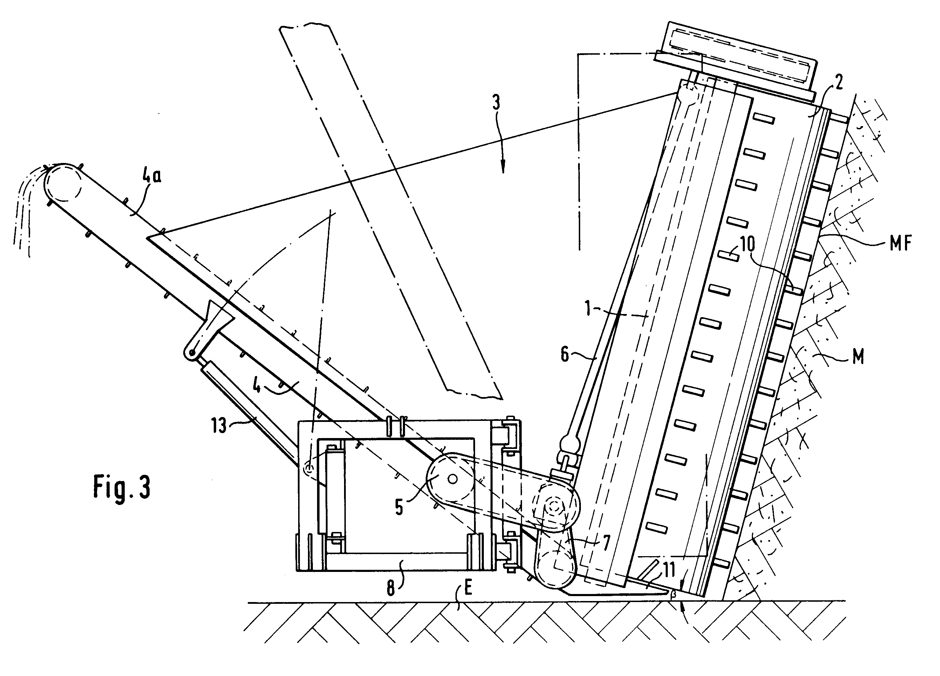

Zur Durchführung des neuartigen Arbeitsverfahrens mit streifenweisem Abfräsen der jeweiligen Miete "M" in deren Längsrichtung, also durch Abtrag der Mietenflanke "M_{F}" und annähernd gleichzeitigem Ablegen des abgefrästen Materials in einer neuen Aufhäufung parallel und um mindestens Maschinenbreite seitlich versetzt zur vorherigen Miete "M", dient gemäß Fig. 1 bis 3 eine an einen Schlepper o.ä. Fahrzeug angebaute Vorrichtung, bei der ein mit messerartigen Förderzinken 10 besetztes, in einem Gestell bzw. Rahmen 1 im wesentlichen vertikal gelagertes, umlaufendes Arbeitswerkzeug, ein diesem bodenseitig beginnend zugeordneter Schrägförderer 4 und mittels Getriebeabzweigungen 6 bzw. 7 eine Antriebslopplung beider vorgenannten Elemente an einem gemeinsamen Hauptantrieb 5 vorgesehen sind und die sich dadurch auszeichnet, daß als Arbeitswerkzeug eine um ihre Längsachse S rotierend angetriebene, gegenüber dem Erdboden E und zur Mietenflanke M_{F} hin geneigte Fräswalze 2 eingesetzt wird, mit sich daran quer zur Arbeitsrichtung R anschließendem Kanal 3, dessen untere Begrenzung durch den Schrägförderer 4 gebildet ist und bei der im Übergangsbereich von der rotierenden Fräswalze 2 zum Kanal 3 und/oder Schrägförderer 4 ein Leitblech 11 o.ä. Einlaufschräge für das Hauptmerkmal angeordnet ist.

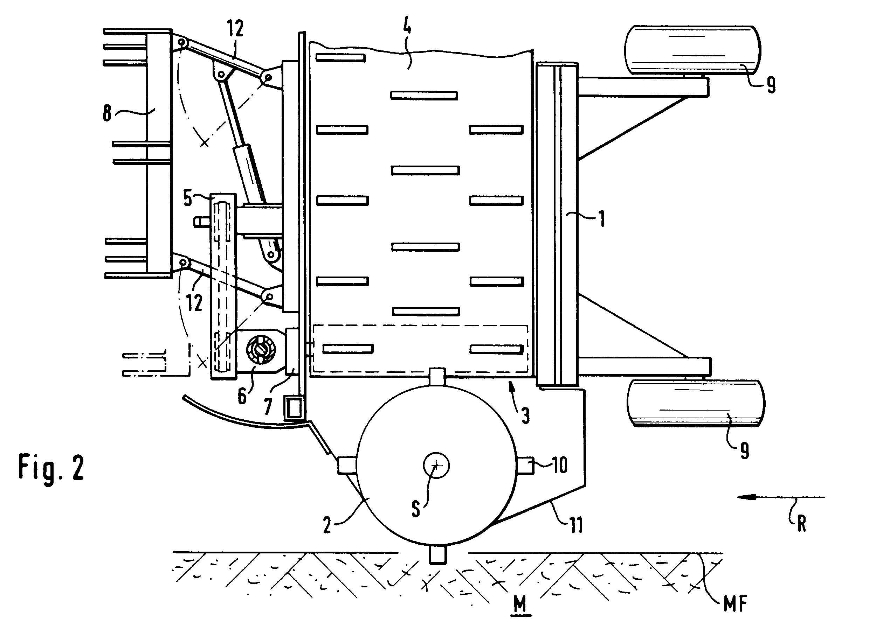

Hierbei ist nach Fig. 1 und 2 baulich des weiteren vorgesehen, daß das Gestell 1 mit einem Dreipunktanbaubock 8 für eine Zugmaschine versehen und zusätzlich über Laufräder 9 o.ä. gegenüber dem Erdboden E abgestützt ist, wobei dieser Anbaubock 8 über ein Parallelogrammgestänge 12 mit dem Gestellrahmen 1 verbunden und zugleich für z.B. Straßenfahrt Fräswalze 2 und Schrägförderer 4 gegeneinander einschwenkbar am Gestell 1 gelagert sind.
Vorteilhaft ist es auch, daß der Schrägförderer 4 mit seinem abgabeseitigen Ende 4a aus dem Kanal herausragt und mittels einer Hydraulikeinrichtung 13 verschwenkbar ist. Gemäß der Ausführungsvariante nach den Zeichnungsfiguren 4 bis 7 kann die Arbeitsweise und der Aufbau aber auch so sein, daß das Gestell 1 alternativ zum Dreipunktanbaubock 8 mit einer höhensowie seitenverstellbaren Zugdeichsel 14 und entsprechenden hydraulischen Verstellzylindern 15, 16 zwischen letzterer 14 und dem Gestell 1 versehen ist.

Dieser Aufbau erlaubt, daß zum einen die das Gestell abstützenden Laufräder 9a für Straßenfahrt höhenverstellbar und bei der Arbeit zugleich in ihrem Winkel zur Fahrtrichtung R veränderbar sind.

Dies ermöglicht einerseits eine enge Kurvenfahrt zwischen den Mieten sowie einen Ausgleich des Fräsdrucks auf die Maschine, wenn die Laufräder bei der Arbeit zur Miete "M" hin eingeschlagen werden.

In weiterer baulicher Ausgestaltung dieser Anhängeelemente ist dabei noch vorgesehen, daß zur Höhenverstellbarkeit jedes der Laufräder 9 bzw. 9a eine um eine horizontale Achse 17 schwenkbar am Gestell 1 gelagerte Winkelachse 18, 19 dient, deren freier Schenkel 19 über eine Schubstange 20 mit dem Höhenverstellzylinder 15 der Zugdeichsel 14 gekoppelt ist.

Vervollständigt wird diese Bauform letztlich noch dadurch, daß der Seitenverstellzylinder 16 der Zugdeichsel 14 mit demjenigen 21 für die Lauf- bzw. Stützräder 9a gleichzeitig steuerbar und die horizontal verschwenkbaren Achsschenkel 22 der Laufräder 9a über eine Koppelstange 23 miteinander bewegungsgleich zwangsverbunden sind. Zur Höhenverstellbarkeit der lenkbaren Laufräder 9a kann in nicht dargestellter Weise anstelle der Winkelachse 18, 19 auch je Seite ein an der Gestellrückseite 1 angeordnetes, vertikalbewegbares Parallelogrammgestänge dienen.

### Bezugsziffernverzeichnis

- 1: Gestell
- 2: Fräswalze
- 3: Kanal
- 4: Schrägförderer
- 5: Hauptantrieb
- 6: Getriebeabzweig
- 7: Getriebeabzweig
- 8: Dreipunktanbaubock
- 9: Laufrad (starr)
- 9a: Laufrad (lenkbar)
- 10: Förderzinken
- 11: Leitblech
- 12: Parallelogrammgestänge
- 13: Verstell-Hydraulik
- 14: Zugdeichsel
- 15: Höhenverstell-Zylinder
- 16: Seitenverstell-Zylinder
- 17: Horizontalachse
- 18: Winkelachse
- 19: freier Schenkel
- 20: Schubstange
- 21: Hydraulikzylinder
- 22: Achsschenkel
- 23: Koppelstange
- E: Erdboden
- M: Kompostmiete
- M_{F}: Mietenflanke
- R: Fahrtrichtung
- S: Längsachse
- β: Neigungswinkel (Anstellwinkel)

## Patentansprüche

1. Vorrichtung zum maschinellen Abtragen und seitlichen Versetzen von in Längsmieten gelagertem Kompost bzw. zu kompostierendem Material mittels eines mit messerartigen Förderzinken (10) besetzten, in einem Gestell bzw. Rahmen (1) im wesentlichen vertikal gelagerten, umlaufenden Arbeitswerkzeug, diesem bodenseitig beginnend zugeordnetem Schrägförderer (4) und einer Antriebskopplung beider letztgenannten Elemente an einen gemeinsamen Hauptantrieb (5),
**dadurch gekennzeichnet,**
daß als Arbeitswerkzeug eine um ihre Längsachse (S) rotierend angetriebene, gegenüber dem Erdboden (E) und zur Mietenflanke (M_{F}) hin geneigte (β) Fräswalze (2) dient, mit sich daran quer zur Arbeitsrichtung (R) anschließendem Kanal (3), dessen untere Begrenzung durch den Schrägförderer (4) gebildet ist und bei der im Übergangsbereich von der Fräswalze (2) zum Kanal (3) und/oder Schrägförderer (4) ein Leitblech (11) o.ä. Einlaufschräge für das Kompostmaterial angeordnet ist.

2. Vorrichtung nach Anspruch 1,
**dadurch gekennzeichnet,**
daß das Gestell (1) mit einem Dreipunktanbaubock (8) für eine Zugmaschine versehen und zusätzlich über Laufräder (9) o.ä. gegenüber dem Erdboden (E) abgestützt ist.

3. Vorrichtung nach den Ansprüchen 1 und 2,
**dadurch gekennzeichnet,**
daß der Anbaubock (8) über ein Parallelogrammgestänge (12) mit dem Gestellrahmen (1) verbunden ist.

4. Vorrichtung nach Anspruch 3,
**dadurch gekennzeichnet,**
daß für die Straßenfahrt Fräswalze (2) und Schrägförderer (4) gegeneinander einschwenkbar am Gestell (1) gelagert sind.

5. Vorrichtung nach Anspruch 3,
**dadurch gekennzeichnet,**
daß der Schrägförderer (4) mit seinem abgabeseitigen Ende (4a) aus dem Kanal herausragt und mittels einer Hydraulikeinrichtung (13) verschwenkbar ist.

6. Vorrichtung nach mindestens einem der vorhergehenden Ansprüche,
**dadurch gekennzeichnet,**
daß das Gestell (1) alternativ zum Dreipunktanbaubock (8) mit einer höhen- sowie seitenverstellbaren Zugdeichsel (14) und entsprechenden hydraulischen Verstellzylindern (15, 16) zwischen letzterer (14) und dem Gestell (1) versehen ist.

7. Vorrichtung nach zumindest den Ansprüchen 1 und 6,
**dadurch gekennzeichnet,**
daß die das Gestell abstützenden Laufräder (9a) mittels eines Parallelogrammgestänges höhenverstellbar sind.

8. Vorrichtung nach mindestens den Ansprüchen 1 und 6,
**dadurch gekennzeichnet,**
daß zur Höhenverstellbarkeit jedes der Laufräder (9a) eine um eine horizontale Achse (17) schwenkbar am Gestell (1) gelagerte Winkelachse (18, 19) dient, deren freier Schenkel (19) über eine Schubstange (20) mit dem Höhenverstellzylinder (15) der Zugdeichsel (14) gekoppelt ist.

9. Vorrichtung nach den vorhergehenden Ansprüchen,
**dadurch gekennzeichnet,**
daß die Laufräder (9a) zugleich in ihrem Winkel zur Fahrtrichtung (R) über einen weiteren Hydraulikzylinder (21) veränderbar sind.

10. Vorrichtung nach Anspruch 9,
**dadurch gekennzeichnet,**
daß der Seitenverstellzylinder (16) der Zugdeichsel (14) mit demjenigen (21) für die Lauf- bzw. Stützräder (9a) gleichzeitig steuerbar und die horizontal verschwenkbaren Achsschenkel (22) der Laufräder (9a) über eine Koppelstange (23) miteinander bewegungsgleich zwangsverbunden sind.

## Claims

1. Device for mechanical removal and lateral shifting of compost, or material to be composted, stored in longitudinal piles by means of a rotating work tool equipped with knife-like conveying tines (10) and substantially vertically mounted in a chassis or frame (10), an inclined conveyor (4) associated with the tool and starting at the base side and a drive coupling of the two last-mentioned elements at a common main drive (5), characterised thereby that serving as work tool is a milling roller (2), which is driven to rotate about its longitudinal axis (S) and is inclined (β) relative to the ground surface (E) and the pile side, with a channel (3) which adjoins thereat transversely to the working direction (R) and the lower boundary of which is formed by the inclined conveyor (4), and in which a guide plate (11) or similar intake angle for the compost material is arranged in the transition region from the milling roller (2) to the channel (3) and/or inclined conveyor (4).

2. Device according to claim 1, characterised thereby, that the chassis (1) is provided with a three-point attachment unit (8) for a tractor and is additionally supported relative to the ground surface (E) by way of ground wheels (9) or the like.

3. Device according to claims 1 and 2, characterised thereby that the attachment unit (8) is connected to chassis frame (8) by way of a parallelogram linkage (12).

4. Device according to claim 3, characterised thereby that milling roller (2) and inclined conveyor (4) are mounted at the chassis (1) to be pivotable in relation to one another for road travel.

5. Device according to claim 3, characterised thereby that the inclined conveyor (4) projects out of the channel by its end (4a) at the delivery side and is pivotable by means of a hydraulic device (13).

6. Device according to at least one of the preceding claims, characterised thereby that the chassis (1) is provided alternatively to the three-point attachment unit (8) with a drawbar (14) displaceable in height and to the side and corresponding displacing cylinders (15, 16) between the latter (14) and the chassis (1).

7. Device according to at least claims 1 and 6, characterised thereby that the ground wheels (9a) supporting the chassis are adjustable in height by means of a parallelogram linkage.

8. Device according to at least claims 1 and 6, characterised thereby that an angle axle (18, 19), which is mounted at the chassis (1) to be pivotable about a horizontal axis (17) and the free limb (19) of which is coupled by way of a pushrod (20) with the height-displacing cylinder (15) of the drawbar (14), serves for the adjustability in height of each of the ground wheels (9a).

9. Device according to the preceding claims, characterised thereby that the ground wheels (9a) are at the same time variable in their angle relative to the travel direction (12) by way of a further hydraulic cylinder (21).

10. Device according to claim 9, characterised thereby that the side-displacing cylinder (16) of the drawbar (14) is controllable simultaneously with that (21) for the ground or support wheels (9a) and the horizontally pivotable axle limbs (22) of the ground wheels (9a) are constrainedly interconnected by means of a coupling link (23) to be movable equally.

## Revendications

1. Appareil pour évacuer mécaniquement et pour déplacer latéralement du compost stocké en tas longitudinaux ou de la matière à transformer en compost au moyen d'un outil de travail rotatif qui est monté essentiellement verticalement dans un bâti ou un cadre (1) et qui est muni de pointes d'avancement (10) semblables à des couteaux, d'un transporteur incliné (4) associé à l'outil de travail et partant du sol et d'un accouplement des deux éléments cités en dernier lieu à une commande principale (5) commune, caractérisé en ce qu'un cylindre de fraisage (2) incliné (β) vers le côté du tas (M_{F}) par rapport au sol (E) et entraîné en rotation autour de son axe longitudinal (S) sert d'outil de travail, lequel comporte un canal (3) qui y est raccordé transversalement par rapport à la direction d'avancement (R), dont la limite inférieure est formée par le transporteur incliné (4), sachant que, dans la zone de transition entre le cylindre de fraisage (2) et le canal (3) et/ou le transporteur incliné (4), l'appareil comporte une tôle de guidage (11) ou des rampes d'introduction analogues pour la matière à transformer en compost.

2. Appareil selon la revendication 1, caractérisé en ce que le bâti (1) est muni d'un attelage à trois points (8) pour une machine de traction et prend en outre appui sur le sol (E) par le biais de roues de déplacement (9) ou analogues.

3. Appareil selon les revendications 1 et 2, caractérisé en ce que l'attelage (8) est relié au bâti (1) par l'intermédiaire d'une tringlerie en forme de parallélogramme (12).

4. Appareil selon la revendication 3, caractérisé en ce que le cylindre de fraisage (2) et le transporteur incliné (4) sont montés sur le bâti (1) de manière a pouvoir pivoter l'un vers à l'autre pour la conduite sur route.

5. Appareil selon la revendication 3, caractérisé en ce que le transporteur incliné (4) dépasse du canal avec son extrémité (4a) située du côté de l'évacuation et peut pivoter au moyen d'un dispositif hydraulique (13).

6. Appareil selon au moins l'une des revendications précédentes, caractérisé en ce que, en tant qu'alternative à l'attelage à trois points (8), le bâti (1) est muni d'une barre de traction (14) réglable en hauteur et latéralement et de vérins de réglage hydrauliques (15, 16) correspondants entre cette dernière (14) et le bâti (1).

7. Appareil selon au moins l'une des revendications 1 et 6, caractérisé en ce que les roues de déplacement (9a) supportant le bâti sont réglables en hauteur au moyen d'une tringlerie en forme de parallélogramme.

8. Appareil selon au moins l'une des revendications 1 et 6, caractérisé en ce qu'un arbre coudé (18, 19) monté sur le bâti (1) de façon à pouvoir pivoter autour d'un axe horizontal (17) sert à régler en hauteur chacune des roues de déplacement (9a), arbre dont la branche libre (19) est accouplée par une bielle (20) au cylindre déplaçable en hauteur (15) de la barre de traction (14).

9. Appareil selon les revendications précédentes, caractérisé en ce que l'angle des roues de déplacement (9a) peut être simultanément modifié par rapport a la direction d'avancement (R) par l'intermédiaire d'un autre vérin hydraulique (21).

10. Appareil selon la revendication 9, caractérisé en ce que le vérin de réglage latéral (16) de la barre de traction (14) peut être actionné en même temps que celui (21) qui est associé aux roues de déplacement ou roues d'appui (9a), et en ce que les branches de l'axe (22) des roues de déplacement (9a) pouvant pivoter horizontalement sont impérativement reliées entre elles par une bielle (23) de manière a ce qu'elles effectuent le même mouvement en même temps.
